# EUROPÄISCHE PATENTANMELDUNG

(11) **EP 2 006 448 A1**
(43) Veröffentlichungstag der Anmeldung: **24.12.2008**
(21) Anmeldenummer: 07110745.2
(22) Anmeldetag: 21.06.2007
(51) Int. Cl.: E01C 19/48, G05D 1/02

(54) **Einbauzug zum erstellen einer Belagschicht aus Beton- oder Asphalt-Material**

(71) Anmelder: Leica Geosystems AG, 9435 Heerbrugg (CH)
(72) Erfinder: Fritz, Matthias, 88131 Lindau (DE)
(74) Vertreter: Büchel, Kaminski & Partner

(57) **Zusammenfassung**

Ein Einbauzug zum Erstellen einer Belagschicht aus Beton-oder Asphalt-Material entlang eine vorgegebenen Weges (6) umfasst eine erste Einheit (1), wie einen Verteiler zum Verteilen des Materials und eine zweite Einheit (2), wie einen Fertiger, zum Glätten des Materials. Die erste und zweite Einheit sind unabhängig voneinander angetrieben und im Verband fahrbar, wobei in Arbeitsstellung die erste Einheit (1) der zweiten Einheit (2) in einem vorgebbaren Abstand vorausläuft. Der Einbauzug weist ein optisches Leitsystem zum Bereitstellen von Steueranweisungen für die erste Einheit (1) - betreffend beispielsweise deren Fahrtrichtung - auf. Das optische Leitsystem umfasst wenigstens eine Sendekomponente (3) zum Senden optische Leitstrahlen (4) und eine Empfangskomponente (5) zum Empfangen der Leitstrahlen (4). Die Sendekomponente (3) ist der ersten Einheit (1) bzw. zweiten Einheit (2), die Empfangskomponente (5) der zweiten Einheit (2) bzw. ersten Einheit (1) zugeordnet.

## Beschreibung

Die Erfindung betrifft einen Einbauzug zum Erstellen einer Belagschicht aus Beton- oder Asphalt-Material nach dem Oberbegriff des Anspruchs 1.

Als Einbauzug werden zwei oder mehr im Verband fahrende Einheiten zum Einbau von Beton- oder Asphalt-Material und Erstellen einer kontinuierlichen Belagschicht mit einem gewünschten Oberflächenverlauf entlang eines vorgegebenen Weges bezeichnet. Solche Einbauzüge finden insbesondere im Verkehrsflächen-Bau, wie beim Erstellen und Reparieren von Strassen und Plätzen, Anwendung. Die im Einbauzug eingesetzten Einheiten stellen beispielsweise wenigstens einen Verteiler und wenigstens einen Fertiger - wie einen Gleitschalungsfertiger oder einen Asphalt-Fertiger - dar. Ebenfalls bekannt ist der Einsatz von zwei oder mehr Fertigern in einem Einbauzug. Dem Fertiger folgt im Allgemeinen noch ein Sprühfahrzeug, das Chemikalien auf den Belag sprüht, die ein zu schnelles Trocknen des Materials verhindern.

Üblicherweise wird beim Einbauvorgang das einzubauende Material mit einer Beschickereinheit, wie einem Lastkraftwagen oder einer Mischmaschine, angeliefert und entlang des vorgegebenen Weges abgeladen. Der Verteiler ist mit einem Verteilorgan, wie einer Schnecke, zum Verteilen des Materials ausgestattet und führt eine Querverteilung und im Allgemeinen auch eine erste Glättung des Materials durch. Die grobe Glättung erfolgt mittels einer Abziehvorrichtung des Verteilers derart, dass bereits in etwa die gewünschte Höhe der Belagschicht erreicht wird. Dem Verteiler in einem vorgebbaren Abstand nachlaufend zieht dann der Fertiger das Material mittels seiner charakteristischen Bohle, die beispielsweise eine Glättebohle sein oder ein Profil aufweisen kann, so ab, dass die gewünschte Höhe der Belagschicht mit gattungsgemässer Genauigkeit - im Millimeter Bereich - erreicht wird.

Um den Einbauzug entlang des vorgegebenen Weges zu führen und gegebenenfalls auch zur vertikalen Positionierung der Arbeitsteile der Einheiten - wie der Einbaubohle, der Abziehvorrichtung und dem Verteilorgan - ist es üblich, eine Referenzlinie - z.B. ein Drahtseil - zu spannen, entlang welcher eine Führung erfolgt. Diese erfolgt über Abstandsfühler, die mit der Steuerungsautomatik der Maschinen verknüpft sind. Dem hintersten Fertiger nachlaufende Einheiten - wie das Sprühfahrzeug - verwenden im Allgemeinen nicht die Referenzlinie zur Entlangtastung, sondern die eingebaute Belagschicht.

Alternativ zur Referenzlinien-Abtastung wird der Fertiger über ein Positions- bzw. Lagebestimmungssystem gesteuert. Beispielsweise wird die Position des Fertigers über ein auf demselben angeordnetes Positionselement - oder mehrere Positionselemente - bestimmt. Dieses ist z.B. ein GPS-Empfänger, der Positionsdaten von Satelliten empfängt, oder ein Reflektor, dessen Position mittels einer Totalstation gemessen wird. Die so ermittelte Position wird - z.B. in einem Geländemodell - mit einer Soll-Position verglichen, wobei aus dem Vergleich Steueranweisungen abgeleitet werden. Die Steueranweisungen beziehen sich auf die Richtungssteuerung/Lenksteuerung der Fertigereinheit, auf die vertikale Positionierung - Arbeitshöhe - der Bohle und ggf. auf die horizontale ein- oder zweidimensionale Ausrichtung der Fertigereinheit und der Bohle. Die Bestimmung der Arbeitshöhe kann je nach Anbringung des Positionselementes aus der Position desselben oder über eine zusätzliche Referenzbestimmung erfolgen.

Derartige Verfahren und Vorrichtungen zur Steuerung eines Fertigers und/oder der Arbeitshöhe von dessen Einbaubohle sind beispielsweise in der EP 1 079 029 A2, der unveröffentlichten US-Patentanmeldung mit der Anmeldenummer 11/071,942 oder der unveröffentlichten europäischen Patentanmeldung mit der Anmeldenummer 04029963.8 beschrieben.

Diese Positions- oder Lagebestimmungsverfahren zur Steuerung sind für hohe Genauigkeiten hinsichtlich der zu erstellenden Belagschicht entwickelt und benötigen dementsprechend komplexe Komponenten und Datenverarbeitungsmethoden. Daher werden nur die mit höchster Genauigkeit arbeitenden Fertiger derart gesteuert. Nun entsteht dadurch die Situation, dass der Fertiger hochpräzise über ein Positions- oder Lagebestimmungssystems gesteuert wird, die restlichen Einheiten des Einbauzugs jedoch zur Steuerung immer noch das weniger komplexe, dafür aber äusserst arbeitsaufwändige Referenzlinien-Verfahren benötigen. Das Referenzlinien-Verfahren erfordert ein Ausmessen und Abstecken der zu bearbeitenden Fläche vor Beginn der Einbauarbeiten. Diese aufwändige Vorbereitung muss trotz alternativer Steuerung des Fertigers - beispielsweise einzig für einen Verteiler - getroffen werden.

Es ist daher eine Aufgabe der Erfindung, den Nachteil des Standes der Technik zu beheben und eine weniger aufwändige Lösung für die Steuerung der Einheiten eines Einbauzugs bereitzustellen.

Diese Aufgabe wird durch die Gegenstände des Anspruchs 1 oder der abhängigen Ansprüche gelöst bzw. die Lösungen weitergebildet.

Erfindungsgemäss wird dem Einbauzug mit wenigstens einer ersten Einheit, wie einem Verteiler, und wenigstens einer zweiten Einheit, wie einem Fertiger, ein optisches Leitsystem mit einer Sendekomponente und einer Empfangskomponente zugeordnet. Die Sendekomponente emittiert optische Leitstrahlen, welche mittels der Empfangskomponente empfangen werden. Über die Leitstrahlen erfolgt die Steuerung der ersten Einheit.

Dazu ist die Sendekomponente mittel- oder unmittelbar an der zweiten Einheit angeordnet und die Empfangskomponente mittel- oder unmittelbar an der ersten Einheit. In einer ersten Ausführungsform der Erfindung ist die Sendekomponente an der zweiten Einheit derart angeordnet, dass sie die Bewegungen der zweiten Einheit mitvollzieht und über die optischen Strahlen sozusagen extrapoliert - die Leitstrahlen übertragen damit die gesteuerten Bewegungen der zweiten Einheit von dieser zur ersten Einheit. Die optischen Strahlen sind Zeiger für die Fahrtrichtung der ersten Einheit, deren horizontale Längs- und/oder Querneigung oder die Arbeitshöhe des Arbeitsteils. Der Empfang der Strahlen mittels der an der ersten Einheit angeordneten Empfangskomponente ermöglicht die Ableitung entsprechender Steuerbefehle hinsichtlich deren Fahrtrichtung, horizontaler Längs- und/oder Querneigung und Arbeitshöhe des Arbeitsteils bzw. ggf. der Arbeitsteile. Es ist natürlich auch möglich, die Empfangskomponente mittel- oder unmittelbar an der zweiten Einheit und die Sendekomponente mittel- oder unmittelbar an der ersten Einheit anzuordnen.

Die erste Einheit fährt im Einbauzug vor der zweiten Einheit. Sie stellt beispielsweise eine Verteilereinheit dar, die Beton oder Asphalt als Einbaugut entlang des vorgegebenen Weges ausbringt und Querverteilung des Materials durchführt. Die Verteilereinheit ist ein auf übliche Art und Weise ausgebildeter und ausgestatteter Verteiler, beispielsweise mit einem ersten Arbeitsteil, wie einer Schnecke, zur Verteilung des Materials und mit Seitenschalungen, um das Material entlang einer vorgegebenen Breite zu verteilen. Im Allgemeinen weisen solche Verteiler ausserdem eine Abziehvorrichtung - Bohle - als weiteres Arbeitsteil auf, um das Material abzuziehen, sodass die Materialschicht bereits in etwa in der gewünschten Höhe erstellt wird.

Die erste Einheit kann auch eine Fertigereinheit sein. So fahren beispielsweise beim zweilagigen oder mehrlagigen Einbauen von Belagschichten zwei bzw. mehrere Fertiger nacheinander im Einbauzug.

Die zweite Einheit ist insbesondere eine Fertigereinheit, wie ein Gleitschalungsfertiger oder ein Asphaltfertiger, mit einer Bohle als - zweitem - Arbeitsteil. Die Bohle ist eine übliche Glättebohle oder eine Bohle mit einem Profil. Um verschieden hohe Materialbeläge zu erstellen, ist die Bohle eines Fertigers höhenverstellbar. Ist die Bohle am Rahmen des Fertigers starr befestigt, erfolgt die Höhenverstellung im Allgemeinen über die Fahrwerke - wie Raupen oder Räder - des Fertigers, die z.B. über Zylinder höhenverstellbar sind. Breite Bohlen, die durchhängen können, sind oft auch noch mittig über einen höhenverstellbaren Zylinder einstellbar. Bei Fertigern, bei denen die Bohle über schwenkbare Träger am Rahmen befestigt ist, erfolgt die Höhenverstellung in bekannter Art und Weise über eine Höhenverstellvorrichtung, wie Hydraulikzylinder.

Die Steuerung des Fertigers kann durch einen Fahrer erfolgen, der den Fertiger entlang des vorgegebenen Weges lenkt und die entsprechenden Einstellungen bezüglich der Neigung des Fertigers und/oder der Bohle und der Einbauhöhe der Bohle trifft. Vorteilhaft wird ein Positions- oder Lagebestimmungssystem zur Kontrolle des Fertigers eingesetzt. Dies kann ein GPS-System sein, das mittels eines am Fertiger angebrachten GPS-Empfängers die räumliche Lage des GPS-Empfängers und damit des Fertigers erfasst. Ebenso kann ein laserbasiertes System verwendet werden. Beispielsweise wird mittels eines oder mehreren im Gelände positionierten Theodoliten oder Totalstationen die Position oder Lage eines oder mehrerer am Fertiger angebrachten Reflektoren bestimmt.

Im Folgenden wird die erste Einheit als Verteiler und die zweite Einheit als Fertiger bezeichnet. Dies dient jedoch lediglich der Vereinfachung und schliesst keineswegs die Ausführung der Erfindung mit alternativen, in einem Einbauzug fahrenden Einheiten aus.

Erfindungsgemäss weist der Einbauzug das vorgängig erwähnte optische Leitsystem zum Bereitstellen von Steueranweisungen - in einer Ausführungsform zum Extrapolieren der Steueranweisungen des Fertigers zum Verteiler - auf. Die Steueranweisungen können aus der Detektionsposition auf der Empfangskomponente bestimmt werden. Z.B. werden Sende- und Empfangskomponente relativ zueinander derart angeordnet und eingestellt, dass jeder Punkt auf der Empfangskomponente einer Richtung und/oder Höhe entspricht. Ist die Empfangskomponente nicht als Detektor ausgebildet, sondern z.B. als reflektives Element, und die Sendekomponente zusätzlich zum Empfang reflektierter Strahlung, so können die Steueranweisungen auch aus der empfangenen reflektierten Strahlung bestimmt werden. Die empfangenen Strahlen können einem Bediener angezeigt werden, z.B. auf einem Monitor, wobei der Bediener dann entsprechende Steuerbefehle geben kann. Beispielsweise ist auf dem Monitor ein Koordinatensystem dargestellt, in welches die Empfangskomponente eingebettet ist - die empfangenen Strahlen werden dann im Koordinatensystem angezeigt. Die Steuerbefehle können ebenso über eine Rechen- und Steuereinheit automatisch ermittelt und ausgeführt werden.

Die Sendekomponente ist als Leitstrahlgenerator zum Erzeugen von Leitstrahlen respektive Referenzstrahlen ausgebildet und umfasst vorteilhaft eine oder mehrere Laserkomponenten zur gerichteten Emission von Laserstrahlen. Mit optischen Elementen, wie z.B. Linsen, können die Laserstrahlen aufgeweitet werden, sodass die Sendekomponente beispielsweise fächerförmig oder kreisförmig aufgeweitete Laserstrahlen als Leitstrahlen bereitstellt. Dies erleichtert - gegenüber einem kollimierten Laserstrahl - insbesondere die Detektion und ggf. die Auswertung respektive Messgenauigkeit. Die Sendekomponente kann auch als Linienlaser, Rotationslaser oder als sogenannter Kreuzlaser ausgeführt sein. Um den Abstand und ggf. Steueranweisungen in Bezug auf den Abstand zwischen Verteiler und Fertiger zu ermitteln, umfasst die Sendekomponente einen Laserentfernungsmesser. Die Sendekomponente kann auch mehrere - ggf. alternative -Komponenten zur Emission der Leitstrahlen aufweisen. So können für die Indikation der Fahrtrichtung, der ein- oder zweidimensionalen Neigung, der Arbeitshöhe von Arbeitsteilen und des Abstand separate Komponenten vorgesehen sein.

Es kann aber auch eine Komponente derart ausgebildet sein, dass mehrere Anweisungen ableitbar sind. Z.B. kann mit einem Kreuzlaser eine Fahrtrichtung und eine Höhe angezeigt werden. Ein Linienlaser ist ausbildbar, um eine Waagrechte und eine Senkrechte zu projizieren - damit sind ebenfalls Fahrtrichtung und Höhe durch die projizierten Linien darstellbar. Durch linienförmige Projektionen ist auch die horizontale ein- oder zweidimensionale Neigung des Fertigers bestimmbar.

Die von der Sendekomponente emittierten Leitstrahlen werden von der Empfangskomponente empfangen. Damit wird die Relativposition und/oder -orientierung von Sende- und Empfangskomponente erfasst - und aufgrund der definierten Zuordnung der Komponenten zum Fertiger und Verteiler auch die Relativposition und/oder -orientierung des Fertigers und Verteilers. Beim Empfang auf photosensitiven positionsempfindlichen Detektionselementen sind die Steueranweisungen für den Verteiler aus der Position der detektierten Leitstrahlen auf den Detektionselementen ableitbar. Bei einer Photodiode als Empfangskomponente kann der Verteiler so gesteuert werden, dass die Photodiode immer Strahlung empfängt. Zur Messung des Abstands zwischen Fertiger und Verteiler weist die Empfangskomponenten ein reflektives Element, vorzugsweise einen Retroreflektor, auf.

Die Empfangskomponente kann als optischer Detektor, wie als Photodetektor, Anordnung von Lasersensoren, oder Bildaufnahmegerät ausgebildet sein. Vorteilhaft umfasst die Empfangskomponente eine flächige Anordnung photosensitiver Bereiche, wodurch die Wahrscheinlichkeit, den Leitstrahl zu verlieren, vermindert wird. Beispielsweise können CCD- oder CMOS-Sensoren eingesetzt werden. Wird eine Belagschicht einheitlicher Höhe so im ebenen Gelände erstellt, dass keine Variation in der Höhe erfolgt, so sind die Leitstrahlen auch mit linear, insbesondere senkrecht zur Fahrtrichtung, angeordneten Detektionselementen, wie einem CCD-Zeilenarray, mit hoher Wahrscheinlichkeit ohne Unterbrechung detektierbar. Für Anwendungen, bei denen ein gerader Weg im ebenen Gelände erstellt wird, bietet ein Leitsystem mit einem Laser zur Emission eines kollimierten Strahls und einer Photodiode zum Empfang des Strahls ausreichende Zuverlässigkeit.

Die erste Ausführungsform der Erfindung ist insbesondere für Anwendungen geeignet, bei denen der vorgegebene Weg keine starken Richtungsänderungen zeigt. Dies ist bei den üblichen Anwendungen, wie bei Autobahnen oder Flughäfen, im Allgemeinen der Fall. Die zu bearbeitenden Oberflächen zeigen meist keine oder nur schwache Änderungen der Geometrien. Der Abstand, in dem der Fertiger hinter dem Verteiler fährt, beträgt im Allgemeinen zwischen 3 m und 30 m. Bei einem kleinen Abstand treffen die Leitstrahlen auch in Kurven - die für oben beschriebene Anwendungen Radien im Bereich von 500 m bis 1000 m haben - auf die Empfangskomponente. Wenn der Verteiler in grösserem Abstand vor dem Fertiger fährt - was beispielsweise notwendig sein kann, wenn zuviel Einbaumaterial geliefert wurde - so funktioniert das optische Leitsystem für den Fahrtweg entlang einer Geraden gattungsgemäss genau. Vor einer Kurve kann der Verteiler seine Fahrgeschwindigkeit verlangsamen, sodass der Abstand verkleinert wird und die Detektion auch in der Kurve noch erfolgt.

Häufig kommt es vor, dass vor Beginn der Arbeiten der Anstellwinkel der Bohle des Fertigers verändert wird. Ist die Sendekomponente fest derart am Fertiger angebracht, dass sie durch die Verstellung verkippt bzw. höhenverstellt wird, so könnte dies zu Fehlanzeigen hinsichtlich der Höhe führen. Indem die Empfangskomponente - z.B. auf einer Schiene - verschiebbar montiert ist, kann eine entsprechende Anpassung vor Beginn der Arbeiten durchgeführt werden. Ebenso kann natürlich die Sendekomponente verstellbar sein.

Die Sende- und Empfangskomponente bzw. -komponenten sind dem Fertiger und/oder dem Verteiler zugeordnet. Beispielsweise erfolgt eine Fixierung der Komponenten über Halteelemente am Rahmen des Fertigers bzw. Verteilers. Die Halteelemente können senkrecht auf die Rahmenebene des Fertigers bzw. Verteilers stehen. Ebenfalls kann eine Anbringung derart erfolgen, dass die Komponenten seitlich über die jeweiligen Rahmen hinausragen, sodass der Strahlgang nicht durch - z.B. Bedienpersonen auf den Fahrzeugen - unterbrochen wird. Soll die Arbeitshöhe des Arbeitsteils des Fertigers durch die Sendekomponente angezeigt werden, so kann die Sendekomponente - bzw. wenigstens eine Komponente derselben - auch auf dem Arbeitsteil angebracht sein. Ist das Arbeitsteil mit dem Fertigerrahmen fest verbunden, so genügt die Anbringung am Fertigerrahmen, wobei ggf. bei der Ableitung der Steueranweisungen in Bezug auf die Höhe Werte eines zusätzlichen Sensors, wie eines am Rahmen angeordneten Neigungssensors, herangezogen werden können, um die Genauigkeit zu steigern. Bei einer über Stellarme mit dem Fertiger verbundenen Bohle kann ein Referenzsensor die Relativposition von Bohle und Fertiger bestimmen, welche dann zur auf der Empfangskomponente angezeigten Höhe addiert wird. Die Sendekomponente oder die Empfangskomponente kann auf dem Fertiger möglichst nahe den Fahrwerken angebracht sein, sodass das System sehr sensitiv ausgelegt ist und damit schnell auf Richtungsänderungen reagieren kann.

In einer weiteren Ausführungsform der Erfindung weist das optische Leitsystem weiters eine Speicher- und Rechenkomponente auf. In dieser Ausführungsform folgen Sende- oder Empfangskomponente nicht mehr den Bewegungen des Fertigers, sondern werden entsprechend berechneten Steueranweisungen - laufend - eingestellt. Zur Bestimmung der Einstellung/en werden die Position oder Lage des Fertigers, der Abstand zwischen Fertiger und Verteiler, die daraus abgeleitete Position des Verteilers und dessen Soll-Position - und ggf. Soll-Arbeitshöhe und Soll-Lage desselben - hinsichtlich des vorgegebenen Weges zur Berechnung der Steueranweisungen verwendet.

Der Verteiler ist in einem vorgegebenen bzw. bekannten Abstand vor dem Fertiger fahrbar. Eine Einhaltung des Abstands kann mit üblichen Methoden kontrolliert werden - z.B. durch Geschwindigkeitsmessung. Ebenfalls kann ein Entfernungsmesser zur Messung des Abstands vorgesehen sein. Der Entfernungsmesser ist z.B. wie vorgängig erwähnt Bestandteil des optischen Leitsystems. Die Messung kann in an die Anforderungen bzw. Gegebenheiten angepassten Intervallen erfolgen.

In der Speichereinheit des Leitsystems ist ein Modell abgespeichert, welches den vorgegebenen Weg und die - zur Erstellung desselben erforderlichen - Soll-Positionen im Gelände respektive entlang des Weges von Verteiler und Fertiger darstellt. Aus der anhand eines Positions- oder Lagebestimmungssystems bestimmten Position oder Lage des Fertigers ist dieser in Hinsicht auf die dem Geländemodell entnehmbaren Soll-Werte steuerbar. Die Positions- oder Lageinformation über den Fertiger wird nun in der Recheneinheit weiters verwendet, um Einstellungen der Sende- und/oder Empfangskomponenten zum Bereitstellen von Steueranweisungen in Hinsicht auf die Soll-Werte des Verteilers zu berechnen. Aus der bekannten Ist-Position oder Ist-Lage des Fertigers, sowie dem bekannten Relativabstand von Fertiger und Verteiler kann die Ist-Position des Verteilers abgeleitet werden. Dem Geländemodell kann dann die an der entsprechenden Ist-Position des Verteilers vorgegebene Soll-Fahrtrichtung und ggf. die SollHöhe des Arbeitsteils oder der Arbeitsteile und die Soll-Ausrichtung des Verteilers entnommen werden.

In der Rechenkomponente sind diese Steueranweisungen als Einstellwerte der Sende- und/oder Empfangskomponente berechenbar. Die Sende- und/oder Empfangskomponente wird dann - vorzugsweise automatisch - derart eingestellt, dass die Steueranweisungen unter Berücksichtigung der Ist-Position oder Ist-Lage des Fertigers bereitgestellt werden. Die Einstellung kann über eine automatische Steuerung der Sende- und/oder Empfangskomponente erfolgen, wobei Sende- und/oder Empfangskomponente mit einem Steuermechanismus ausgestattet sind. Bei jeder neuen Berechnung wird die Einstellung aktualisiert.

Die Erfindung wird nachfolgend anhand von in den Zeichnungen schematisch dargestellten Ausführungsbeispielen rein beispielhaft näher beschrieben. Im Einzelnen zeigen
- Figur 1: eine erste und zweite Einheit eines Einbauzugs mit einer ersten Ausführungsform eines optischen Leitsystems gemäss der Erfindung;
- Figur 2: eine erste und zweite Einheit eines Einbauzugs mit einer zweiten Ausführungsform eines optischen Leitsystems gemäss der Erfindung;
- Figur 3: eine erste und zweite Einheit eines Einbauzugs mit einer dritten Ausführungsform eines optischen Leitsystems gemäss der Erfindung;
- Figur 4: eine erste und zweite Einheit eines Einbauzugs mit einer vierten Ausführungsform eines optischen Leitsystems gemäss der Erfindung;
- Figur 5: schematisch eine weitere Ausführungsform der Erfindung;
- Figur 6: ein Ausführungsbeispiel für eine Sendekomponente;
- Figur 7: in acht Teilfiguren 7A bis 7H Ausführungsbeispiele für eine Empfangskomponente bzw. für empfangene Leitstrahlen;

Die Darstellungen in den Figuren sind nicht als massstäblich zu betrachten. Insbesondere sind Darstellungen der Komponenten des optischen Leitsystems und Positionsbestimmungskomponenten im Verhältnis zu den Einheiten des Einbauzugs vergrössert dargestellt.

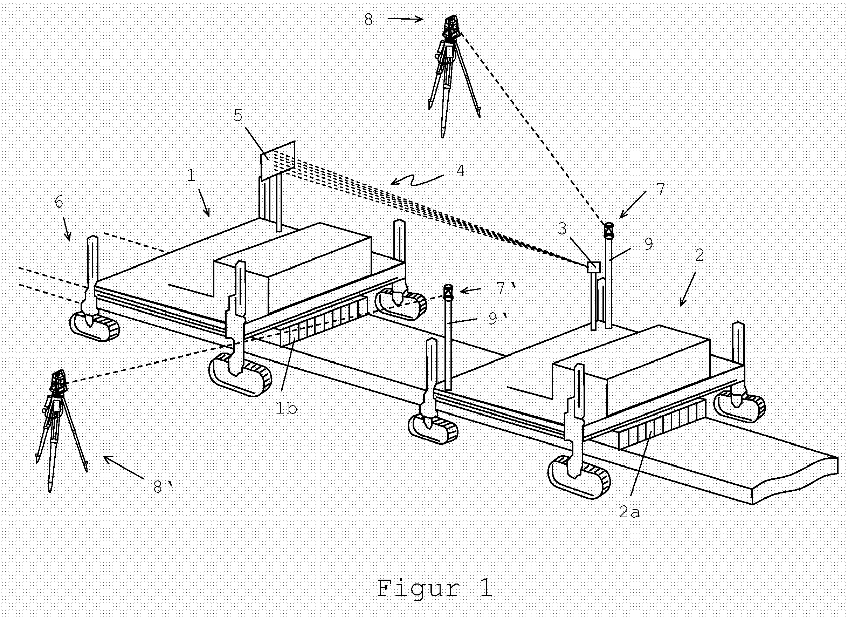

In Figur 1 dargestellt sind eine erste Einheit 1 und zweite Einheit 2 eines Einbauzugs in Arbeitsstellung. Die erste Einheit 1 stellt einen Verteiler - "spreader" - dar, die zweite Einheit 2 einen Gleitschalungsfertiger mit einer Glättebohle 2a als zweites Arbeitsteil. Nicht gezeigt ist eine Beschickereinheit, die das Material anliefert und vor dem Verteiler entlang des vorgegebenen, zu bearbeitenden Weges 6 ausbringt. Die Beschickung erfolgt beispielsweise konventionell aus Lastkraftwagen. Allgemein können Verteiler bzw. Fertiger auch Bunker für das Einbaumaterial aufweisen, sowie eine Fördervorrichtung zum Fördern des Materials nach hinten vor die Bohle. Die erste Einheit 1 des Einbauzugs - der Verteiler - verteilt das Material mittels eines ersten, in der Figur nicht gezeigten, Arbeitsteils quer über den vorgegebenen Weg 6. Der Weg kann beispielsweise 16 m breit sein. Mit einer Abziehbohle 1b als weiteres Arbeitsteil zieht der Verteiler das Material ab und glättet es grob. Der dem Verteiler nachlaufende Gleitschalungsfertiger glättet dann die z.B. noch um einige Zentimeter zu hohe Materialschicht mit der Glättebohle 2a, sodass eine vorgegebene Höhe der Schicht auf Millimeter genau erreicht wird. Nach dem Gleitschalungsfertiger fährt dann beispielsweise noch ein - nicht gezeigtes - Sprühfahrzeug, dass sich entlang der eingebauten Materialschicht tastet.

Da der Gleitschalungsfertiger die Richtung und Höhe des vorgegebenen Weges mit höchster Genauigkeit erstellen muss, ist eine entsprechend präzise Steuerung desselben erforderlich. Um den Gleitschalungsfertiger gattungsgemäss genau zu steuern, sind zwei Reflektoren 7,7' als Positionsindikatoren über Halteelemente 9,9' am Gleitschalungsfertiger fest angebracht. Mit zwei im Gelände angeordneten Tachymetern 8,8' wird die Position der Reflektoren 7,7' erfasst. Aus dieser Positionsbestimmung und der bekannten Lagebeziehung zwischen Reflektoren 7,7' und Gleitschalungsfertiger ist die Position desselben ableitbar. Die abgeleitete Position wird mit einer vorgegebenen Soll-Position der Gleitschalungsfertigers verglichen und der Gleitschalungsfertiger entsprechend gesteuert.

Da die Glättebohle 2a des Gleitschalungsfertigers hier starr am Rahmen befestigt ist, kann aus der Positionsbestimmung auch die Positionshöhe der Bohle abgeleitet werden. Gegebenenfalls wird zur Erhöhung der Genauigkeit noch ein Referenzsensor eingesetzt, der die Relativposition von Glättebohle 2a und Fertiger-Rahmen zusätzlich bestimmt.

Der Gleitschalungsfertiger wird über die Reflektoren 7,7' und Tachymeter 8,8' als Positionsbestimmungssystem hochpräzise gesteuert. Um nun auch den vorauslaufenden Verteiler ohne grossen Aufwand zu steuern, ist dem Einbauzug erfindungsgemäss ein optisches Leitsystem zugeordnet. Dieses umfasst eine auf dem Gleitschalungsfertiger angeordnete Sendekomponente 3 zum Emittieren von optischen Leitstrahlen 4 sowie eine auf dem Verteiler angeordnete Empfangskomponente 5 zum Empfangen der Leitstrahlen 4. Die Sendekomponente 3 ist hier als Laser mit einem optischen Element zum Aufweiten des Laserstrahls ausgebildet. Der fächerförmig aufgeweitete Laserstrahl stellt die Leitstrahlen 4 dar. Die Sendekomponente 3 ist am Gleitschalungsfertiger derart fixiert, dass die Leitstrahlen 4 in Fahrtrichtung desselben emittiert werden. Bewegungen - wie Richtungswechsel - des Gleitschalungsfertiger werden von der Sendekomponente 3 mitvollführt und durch die Leitstrahlen 4 entsprechend übertragen. Mit dem gezeigten fächerförmigen Laserstrahl sind die Fahrtrichtung und eine horizontale Neigung quer zur Fahrtrichtung anzeigbar.

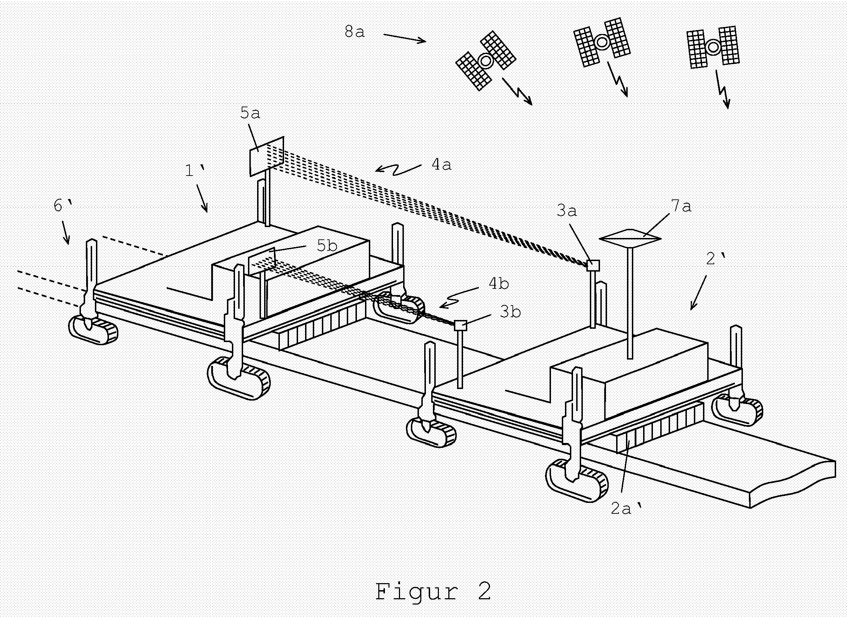

Figur 2 zeigt ebenfalls einen Verteiler 1' als erste Einheit und eine Deckenfertiger 2' als zweite Einheit, die im Verband zum Erstellen einer Betondecke entlang eines vorgegebenen Weges 6' fahren. Der Deckenfertiger 2' wird hier alternativ über ein GPS-System gesteuert. Ein als Lageindikator auf dem Deckenfertiger 2' angeordneter GPS-Empfänger 7a empfängt Signale von Satelliten 8a. Aus den empfangenen Signalen ist die räumliche Lage des GPS-Empfängers 7a und damit auch die räumliche Lage des Deckenfertigers 2' ermittelbar. Das optische Leitsystem des Einbauzuges umfasst einen ersten, auf dem Deckenfertiger 2' montierten Lasersender 3a und einen zweiten, auf dem Deckenfertiger 2' montierten Lasersender 3b als Sendekomponente, sowie einen ersten, auf dem Verteiler 1' montierten CCD-Sensor 5a und einen zweiten, auf dem Verteiler 1' montierten CCD-Sensor 5b als Empfangskomponente. Der erste Lasersender 3a emittiert einen fächerförmigen, auf den Weg 6' senkrechten Laserstrahl 4a zur Anzeige der Fahrtrichtung des Deckenfertigers 2' auf dem ersten CCD-Sensor 5a. Durch die auf den ersten CCD-Sensor 5a auftreffenden Leitstrahlen wird dem Verteiler 1' bzw. einer Bedienperson auf dem Verteiler 1' die vorgegebene Fahrtrichtung angezeigt, insbesondere um ein Abdriften des Verteilers 1' von der vorgegebenen Fahrtrichtung zu verhindern. Der zweite Lasersender 3b emittiert einen ebenfalls fächerförmigen, auf den Weg 6' horizontalen Laserstrahl 4b zur Anzeige der Höhe des Deckenfertigers 2' bzw. der Einbauhöhe von dessen Bohle 2a'.

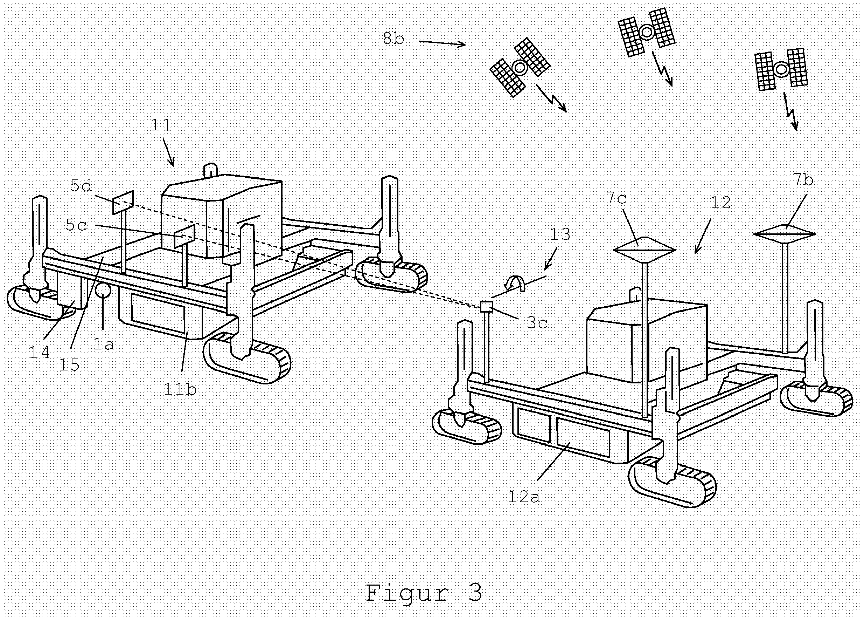

Figur 3 zeigt eine erste Einheit - einen Verteiler 11 - und eine zweite Einheit - einen Fertiger 12 - eines Einbauzugs mit einem optischen Leitsystem gemäss der Erfindung. Das optische Leitsystem umfasst einen Rotationslaser 3c als Sendekomponente und einen ersten Flächensensoren 5c mit lichtempfindlichen Bereichen und zweiten Flächensensor 5d mit lichtempfindlichen Bereichen als Empfangskomponente. Der Rotationslaser 3c dreht in Richtung des Pfeils um die gezeigte horizontale Achse 13. Dadurch wird mit dem Laserstrahl eine auf die Rahmenebene des Fertigers 12 - und Verteilers 11 - im Wesentlichen senkrechte Leitstrahlebene aufgespannt. Indem auf dem Verteiler 11 zwei Empfänger angeordnet sind, werden an zwei Positionen Leitstrahl-Signale empfangen, wodurch die Genauigkeit der Bestimmung der "extrapolierten" Fahrtrichtung des Fertigers 12 und der daraus abgeleiteten Steueranweisungen für den Verteiler 11 erhöht wird.

Der Fertiger 12 ist hier mit einem variablen Rahmen und einer Bohle 12a mit variabler Bohlenbreite ausgebildet. Die Bohle ist an den Rahmen-Längsträgern fixiert. Die RahmenQuerträger sind in der Breite verstellbar, z.B. teleskopartig ausziehbar. Dies ermöglicht insbesondere den Einsatz der Bohle 12a, deren Breite variierbar ist. Im hinteren Bereich der beiden Längsträger sind zwei GPS-Empfängerantennen 7b und 7c angeordnet. Über Satellitensignale von GPS-Satelliten 8b - die hier in ihrer Anzahl und Anordnung rein nur zur anschaulicheren Erläuterung dargestellt sind - wird die Position des Fertigers 12 bestimmt. Signalverarbeitungseinheiten können in bekannter Art und Weise positioniert sein - z.B. auf dem Fertiger 12 oder extern.

Der Verteiler 11 ist mit einer Schnecke 1a als erstes Arbeitsteil ausgestattet. Mittels der Schnecke 1a erfolgt eine Querverteilung des einzubauenden Materials. Um das Material in der gewünschten Breite zu verteilen, weist der Verteiler eine Seitenschalung 14 auf. Zusätzlich ist auch eine Höhenschalung 15 vorgesehen, damit die Dicke der Materialschicht bereits in etwa dem vorgegebenen Wert entspricht. Mit der Abziehbohle 11b als weiteres Arbeitsteil erfolgt eine erste Grob-Glättung der Schicht.

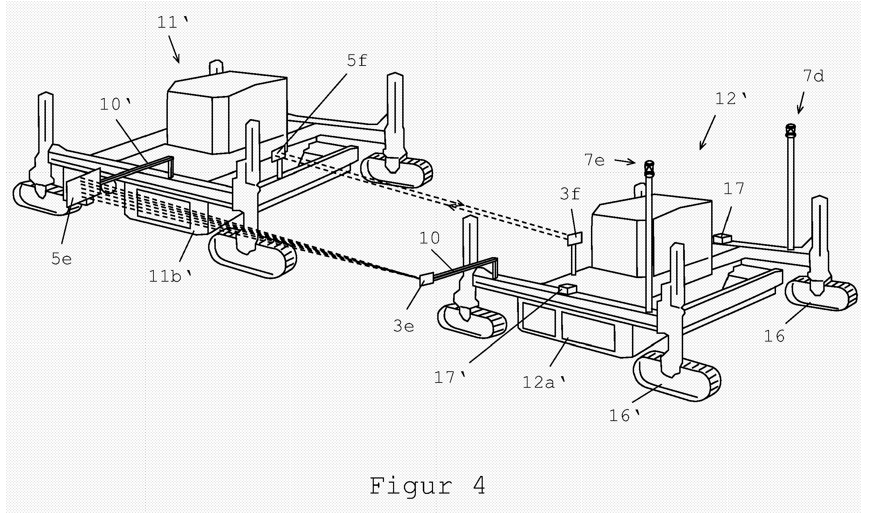

Figur 4 zeigt einen Fertiger 12' mit einer Bohle 12a' und einen Verteiler 11' mit einer Schnecke und einer Abziehbohle 11b' entsprechend Figur 3. Der Fertiger 12' weist einen ersten, am rechten Rahmen-Längsträger angebrachten Reflektor 7d und einen zweiten, am linken Rahmen-Längsträger angebrachten Reflektor 7e auf, welche Reflektoren 7d,7e Positionsindikatoren darstellen. Die Anordnung der Reflektoren 7d,7e erfolgt am - in Arbeitsrichtung des Fertigers 12' - hinteren Ende der Rahmen-Längsträger und möglichst am äusseren Rand der Träger, d.h. möglichst nahe an den Fahrwerken 16,16'. Damit wird eine hohe Sensitivität des Systems erreicht, indem sich Positionsänderungen des Fertigers 12' auf die Positionen der Reflektoren 7d,7e übertragen und das System damit auf kleinste Änderungen der Lage und Höhe des Fertigers 12' bzw. der Bohle 12a' reagiert. Weiters am Rahmen angebracht sind zwei Neigungssensoren 17 und 17', jeweils ein Neigungssensor 17 bzw. 17' auf jeweils einem Rahmen-Längsträger. Die Sensoren sind in der Mitte des Rahmens befestigt und messen sowohl die Längs- als auch die Querneigung des Rahmens bzw. Fertigers 12' bzw. der Bohle 12a'. Die Reflektoren 7d,7e auf dem Fertiger 12' werden mit einem nicht dargestellten Positionsbestimmungssystem, z.B. mit Tachymetern entsprechend Figur 1, vermessen. Mit den Informationen des Positionsbestimmungssystems und der Neigungssensoren 17,17' sind Punkte am Fertiger 12' berechenbar, anhand welcher Berechnung ein Vergleich der gemessenen Ist-Positionen mit gewünschten Soll-Positionen der Punkte durchgeführt werden kann und der Fertiger 12' - insbesondere automatisch - in Position und Orientierung steuerbar ist. Gleichzeitig wird damit die Einbauhöhe und Lage der mit dem Fertiger 12' verbundenen Bohle 12a' gesteuert.

Um Steueranweisungen für den Verteiler 11' bereitzustellen, ist ein optisches Leitsystem in einer speziellen Anordnung vorgesehen. Eine, einen divergenten, fächerförmigen Strahl aussendende Laserkomponente 3e als Sendekomponente des Leitsystems ist über ein Befestigungselement 10 derart am Rahmen eines Fertigers 12' als zweiter Einheit eines Einbauzugs angebracht, dass die Leitstrahlen 4c seitlich neben dem Fertiger emittiert werden. Ein photosensitiver Flächensensor 5e als Empfangskomponente ist entsprechend über ein Trägerelement 10' am Verteiler 11' als erster Einheit des Einbauzugs angebracht. Mit einer solchen Anordnung wird eine Unterbrechung des optischen Strahlgangs der Leitstrahlen 4c - beispielsweise durch Bedienpersonen, die sich auf den Einheiten bewegen, vermieden. Die Empfangskomponente des optischen Leitsystems umfasst in dieser Ausführungsform weiters ein reflektives Element 5f, welches am hinteren Querträger des Fertiger-Rahmens befestigt ist. Ein Laserentfernungsmesser 3f als Teil der Sendekomponente des optischen Leitsystems, emittiert Laserstrahlen gegen das reflektive Element und empfängt die reflektierten Strahlen zur Abstandsbestimmung.

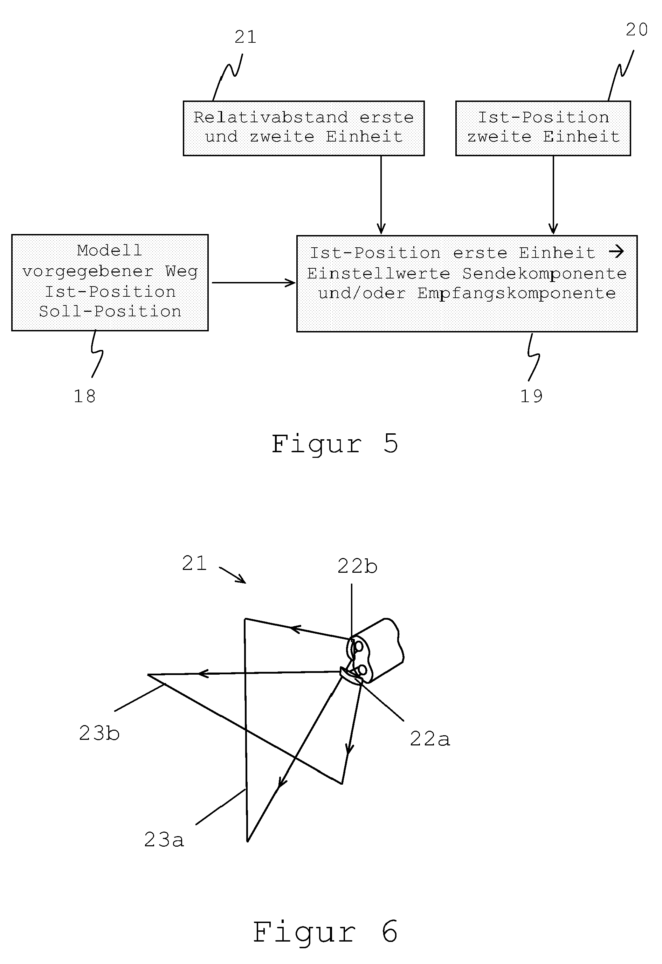

In Figur 5 sind die Komponenten eines optischen Leitsystems gemäss einer weiteren erfindungsgemässen Ausführungsform schematisch dargestellt. Es wird vorausgesetzt, dass der Abstand zwischen erster und zweiter Einheit bekannt ist. Das optische Leitsystem weist eine Sende- und Empfangskomponente, und weiters noch eine Speicherkomponente 18 und eine Rechenkomponente 19 auf. In der Speicherkomponente 18 ist ein Modell abgespeichert, welches den vorgegebenen Weg, entlang dessen eine Beton- oder Asphaltschicht erstellt werden soll, darstellt, sowie die Soll-Positionen der ersten Einheit entlang des Weges. Gegebenenfalls sind im Modell weitere Informationen gespeichert, wie das Ist- und Soll-Gelände und die Ist- und Soll-Positionen und -Ausrichtungen der Einheiten und Arbeitshöhen der Arbeitsteile.

An die Rechenkomponente werden der Abstandswert und die Informationen bezüglich der Ist-Position oder Ist-Lage der zweiten Einheit eines Positions- oder Lagebestimmungssystems 20, wie beispielsweise in den Figuren 1 bis 4 gezeigt, übermittelt. Der Abstandswert kann von einem Laserentfernungsmesser 20 an die Rechenkomponente 19 übertragen werden. Ebenso kann der Abstandswert in der Speicherkomponente 18 gespeichert und über eine Schnittstelle in die Rechenkomponente 19 eingelesen werden. Gegebenenfalls wird der Abstandswert auch manuell in die Rechenkomponente 19 eingegeben. In der Rechenkomponente 19 wird aus der Ist-Position oder Ist-Lage und dem Ist-Abstand zwischen erster und zweiter Einheit die Ist-Position der ersten Einheit berechnet. Diese Ist-Position wird mit der entsprechenden Soll-Position aus dem Modell verglichen. Unter Berücksichtigung der Ist-Position oder Ist-Lage der zweiten Einheit und der - z.B. in der Speicherkomponente 18 abgespeicherten - Relativposition von Sendekomponente und zweiter Einheit werden nun Einstellwerte für die Sende- und/oder Empfangskomponente bestimmt, sodass mittels derselben Steueranweisungen für die erste Einheit bereitstellbar sind.

In Figur 6 ist ein Ausführungsbeispiel für eine Sendekomponente eines erfindungsgemässen optischen Leitsystems dargestellt. Die Sendekomponente ist als Linienlaser 21 zur Projektion einer vertikalen Linie 23a und einer horizontalen Linie 23b ausgebildet. Von Laserkollimatoren ausgesandte Laserstrahlen werden mittels zylindrischen Linsen 22a und 22b aufgeweitet, sodass jeweils Linien auf eine Empfängerfläche projiziert werden.

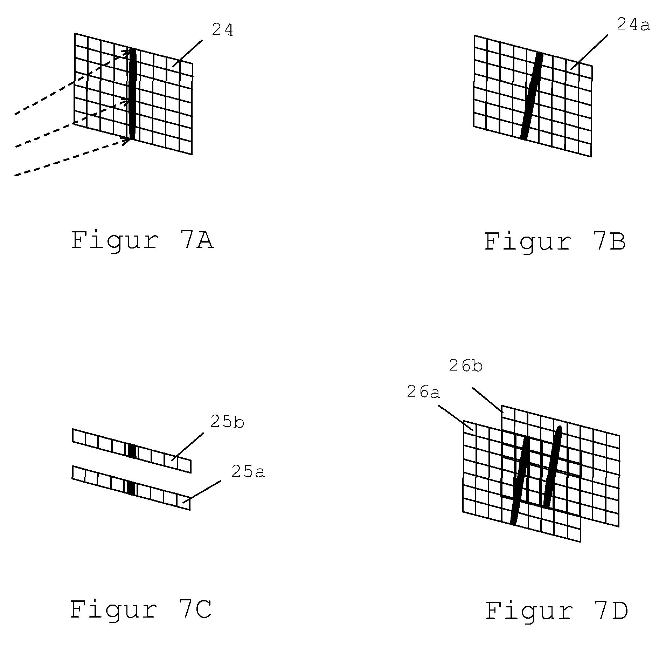

Die Figuren 7A bis 7H zeigen Ausführungsbeispiele von Strahlungsdetektoren, welche die Empfangskomponente oder einen Teil derselben bilden können, wobei die schwarzen Flächen jeweils auf dem jeweiligen Strahlungsdetektor abgebildete Leitstrahlen darstellen.

Im ersten Ausführungsbeispiel aus Figur 7A ist der Strahlungsdetektor als CCD-Flächensensor 24 ausgebildet. Anhand der Abbildung eines mittels elektromagnetischer Strahlung erzeugten Referenzsignals auf dem CCD-Flächensensor 24 ist erkennbar, dass die Sensorfläche senkrecht auf das zentrische Leitstrahlen-Signal ausgerichtet ist.

In Figur 7B dagegen ist in einem zweiten Ausführungsbeispiel die Leitstrahlen-Abbildung auf dem als CCD-Sensor 24a ausgebildeten Strahlungsdetektor aus ihrer zentrischen Lage gewandert, die Sensorfläche ist also gegen die Referenzsignal-Achse geneigt. Eine solche Abbildung des Signals wird beispielsweise dann erhalten, wenn der Detektor bzw. die erste oder zweite Einheit - in Referenz zu den obigen Ausführungen - quer zur Fahrtrichtung geneigt ist.

Figur 7C zeigt den Strahlungsdetektor in einem dritten Ausführungsbeispiel als Anordnung zweier CCD-Zeilensensoren 25a,25b. Das Bild des Leitstrahlen-Signals deutet auf eine korrekte Relativlage von Strahlungsdetektor und Leitstrahlgenerator hin.

Das vierte Ausführungsbeispiel aus Figur 7D stellt einen als Anordnung zweier matrizenförmiger CCD 26a,26b ausgebildeten Strahlungsdetektor dar. Die beiden CCD 26a,26b sind mit einem Zwischenraum in zwei Ebenen angeordnet. Mit einer derartigen räumlichen Anordnung ist sowohl eine Neigung der CCD 26a,26b - und der ersten bzw. zweiten Einheit - quer zur Fahrtrichtung als auch in Fahrtrichtung erfassbar. Die Grösse der Neigung ist beispielsweise anhand von Parametern wie Lichtintensität oder Exzentrizität der Position der Abbildung auf den CCD 26a,26b ermittelbar. Ebenso ist es möglich, die Neigung anhand einer zuvor vorgängig durchgeführten Kalibrierung zu bestimmen.

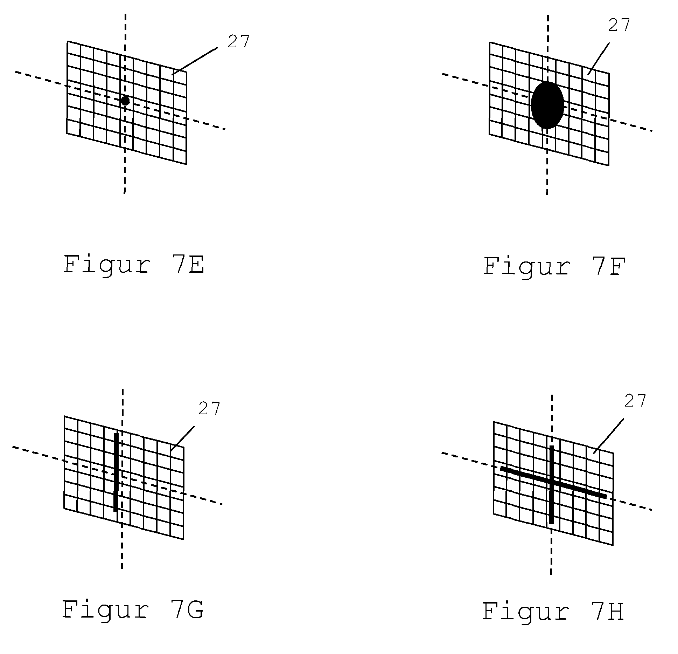

Die Figuren 7E bis 7H zeigen unterschiedliche Abbildungen von Leitstrahlen auf einem Strahlungsdetektor 27 der Empfangskomponente des optischen Leitsystems. Die gestrichelten Linien definieren jeweils die Null-Position respektive die Soll-Position bzgl. Richtung - senkrechte gestrichelte Linie - und Höhe - horizontale gestrichelte Linie. In Figur 7E ist die Abbildung eines kollimierten Leitstrahlbündels an den jeweiligen Null-Positionen gezeigt. Figur 7F zeigt die Abbildung eines kreisförmig aufgeweiteten Leitstrahlenbündels. In Figur 7G ist die Projektion einer senkrechten Linie gezeigt - die Linie weicht von der Null-Position leicht ab - mit einer entsprechenden Steueranweisung kann die Richtungsabweichung korrigiert werden. Figur 7H zeigt die Projektion einer senkrechten und einer horizontalen Linie - die beispielsweise mit einem Linienlaser entsprechend Figur 6 als Sendekomponente projiziert werden - die senkrechte Linie indiziert eine korrekte Fahrtrichtung, die horizontale Linie eine korrekte Arbeitshöhe.

## Patentansprüche

1. Einbauzug zum Erstellen einer Belagschicht aus Beton- oder Asphalt-Material entlang eines vorgegebenen Weges (6,6') in einem Gelände,
mit
■ wenigstens einer ersten Einheit (1,1',11,11') mit wenigstens einem, ggf. höhenverstellbaren, ersten Arbeitsteil (1a) zum Durchführen eines ersten Material-Bearbeitungsschritts, wie Verteilen des Materials,
und
■ wenigstens einer zweiten Einheit (2,2',12,12') mit einem höhenverstellbaren zweiten Arbeitsteil (2a), wie einer Bohle (2a, 12a), zum Durchführen eines zweiten Material-Bearbeitungsschritts, wie Glätten des Materials,
welche Einheiten unabhängig voneinander angetrieben und im Verband fahrbar sind,
wobei in Arbeitsstellung die erste Einheit (1,1' ,11,11') der zweiten Einheit (2,2',12,12') in einem, insbesondere vorgebbaren, Abstand vorausläuft,
**dadurch gekennzeichnet, dass**
der Einbauzug ein optisches Leitsystem zum Bereitstellen von Steueranweisungen für die erste Einheit (1,1',11,11') aufweist, welches Leitsystem
■ wenigstens eine der zweiten Einheit (2,2',12,12') bzw. der ersten Einheit (1,1',11,11') zugeordnete Sendekomponente (3,3a,3b,3c,3e,3f,21) zum Senden optischer Leitstrahlen (4,4c) und
■ wenigstens eine der ersten Einheit (1,1' ,11,11') bzw. der zweiten Einheit (2,2',12,12') zugeordnete Empfangskomponente (5,5a,5b,5c,5d,5e,5f,24,24a,25a,25b, 26a,26b,27) zum Empfangen der Leitstrahlen (4,4c) umfasst.

2. Einbauzug nach Anspruch 1,
**dadurch gekennzeichnet, dass**
das Leitsystem zum Bereitstellen von wenigstens einer der folgenden Steueranweisungen vorgesehen ist:
■ Anweisungen betreffend die Fahrtrichtung der ersten Einheit (1,1',11,11'),
■ Anweisungen betreffend die horizontale ein- oder zweidimensionale Ausrichtung der ersten Einheit (1,1',11,11'),
■ Anweisungen betreffend die Arbeitshöhe des ersten Arbeitsteils (1a),
■ Anweisungen betreffend den Abstand.

3. Einbauzug nach einem der Ansprüche 1 oder 2,
**dadurch gekennzeichnet, dass**
die erste Einheit (1,1' ,11,11') ein höhenverstellbares weiteres Arbeitseil (11b) zum Durchführen eines weiteren Material-Bearbeitungsschritts, wie Abziehen des Materials aufweist, und das Leitsystem weiters zum Bereitstellen von Steueranweisungen betreffend die Arbeitshöhe des weiteren Arbeitsteils (11b) vorgesehen ist.

4. Einbauzug nach einem der vorangehenden Ansprüche,
**dadurch gekennzeichnet, dass**
die Sendekomponente wenigstens eine der folgenden Komponenten umfasst:
■ wenigstens eine Laserkomponente zum Senden eines kollimierten Laserstrahlenbündels,
■ wenigstens eine Laserkomponente (3a,3b,3e) zum Senden eines fächerförmig aufgeweiteten Laserstrahlenbündels (3e),
■ wenigstens einen Linienlaser (21),
■ wenigstens eine Laserkomponente zum Senden eines kreisförmig aufgeweiteten Laserstrahlenbündels,
■ wenigstens einen Rotationslaser (3c) zum Erzeugen einer Leitstrahlebene
■ einen Laserentfernungsmesser (3f).

5. Einbauzug nach einem der vorangehenden Ansprüche,
**dadurch gekennzeichnet, dass**
die Empfangskomponente wenigstens eine der folgenden Komponenten umfasst:
■ wenigstens einen CCD-Zeilensensor (25a,25b) oder CCD-Flächensensor (24,26a,26b),
■ wenigstens eine Photodiode und/oder
■ wenigstens ein reflektives Element (5f).

6. Einbauzug nach einem der vorangehenden Ansprüche,
**dadurch gekennzeichnet, dass**
die Empfangskomponente (5,5a,5b,
5c,5d,5e,5f,24,24a,25a,25b,26a,26b,27) höhenverstellbar, beispielsweise auf einer Schiene, auf der ersten
Einheit (1,1',11,11') oder der zweiten
Einheit (2,2',12,12') angeordnet ist.

7. Einbauzug nach einem der vorangehenden Ansprüche,
**dadurch gekennzeichnet, dass**
an der zweiten Einheit (2,2',12,12') ein Positionsindikator (7,7',7d,7e) oder Lageindikator (7a) angeordnet ist, wobei über ein, insbesondere im Gelände positioniertes, Positionsbestimmungssystem (8,8') oder Lagebestimmungssystem, wie eine Totalstation, die Position oder Lage des Indikators und mittel- oder unmittelbar
■ die Ist-Position oder Ist-Lage der zweiten Einheit (2,2',12,12') und/oder
■ die Ist-Arbeitshöhe des zweiten Arbeitsteils (2a) bestimmbar und Steueranweisungen für die zweite Einheit (2,2',12,12') betreffend wenigstens eines der Folgenden bereitstellbar sind:
- die Fahrtrichtung der zweiten Einheit (2,2',12,12'),
- die horizontale ein- oder zweidimensionale Ausrichtung der zweiten Einheit (2,2',12,12'),
- die Arbeitshöhe des zweiten Arbeitsteils (2a).

8. Einbauzug nach Anspruch 7, wobei die erste
Einheit (1,1',11,11') der zweiten (2,2',12,12') Einheit in einem vorgegebenen Abstand vorausläuft,
**dadurch gekennzeichnet, dass**
das Leitsystem weiters
■ eine Speicherkomponente (18) zum Speichern eines Modells, welches
- den vorgegebenen Weg und - daraus abgeleitet -
- die jeweilige Soll-Position der ersten Einheit (1,1',11,11'), und ggf. weiters
- die jeweilige horizontale ein- oder zweidimensionale Soll-Ausrichtung der ersten Einheit (1,1',11,11'), und/oder
- die jeweilige Soll-Arbeitshöhe des ersten Arbeitsteils (1a) und/oder weiteren Arbeitsteils (11b)
darstellt, und
■ eine Rechenkomponente (19) zum Berechnen der Ist-Position der ersten Einheit (1,1' ,11,11') aus der Ist-Position oder Ist-Lage der zweiten
Einheit (2,2',12,12') und dem vorgegebenen Abstand und zum Erzeugen der Steueranweisungen für die erste Einheit (1,1',11,11') unter Verwendung
- der berechneten Ist-Position der ersten Einheit (1,1',11,11'),
- der Soll-Fahrtrichtung der ersten Einheit (1,1',11,11') an der berechneten Position und/oder
- der horizontalen ein- oder zweidimensionalen Soll-Ausrichtung der ersten Einheit (1,1',11,11') an der berechneten Position und/oder
- ggf. der Soll-Arbeitshöhe des ersten
Arbeitsteils (1a) und/oder weiteren
Arbeitsteils (11b) an der berechneten Position und
- der Ist-Position oder Ist-Lage der zweiten Einheit (2,2',12,12')
aufweist.
